(19) **Europäisches Patentamt**
**European Patent Office**
**Office européen des brevets**

(11) **EP 4 773 247 A1**

(12) **EUROPEAN PATENT APPLICATION**
published in accordance with Art. 153(4) EPC

(43) Date of publication:
08.07.2026 Bulletin 2026/28

(21) Application number: 24859858.3

(22) Date of filing: 28.08.2024

(51) International Patent Classification (IPC):
H01M 4/62 (2006.01)      C08F 220/06 (2006.01)
C08F 220/18 (2006.01)    C08F 220/56 (2006.01)
C08L 33/08 (2006.01)     H01G 11/38 (2013.01)
H01M 4/13 (2010.01)      H01M 4/139 (2010.01)
H01M 4/1391 (2010.01)    H01M 4/1397 (2010.01)
H01M 4/505 (2010.01)     H01M 4/525 (2010.01)
H01M 4/58 (2010.01)

(52) Cooperative Patent Classification (CPC):
C08F 220/06; C08F 220/18; C08F 220/56;
C08L 33/08; H01G 11/38; H01M 4/13; H01M 4/139;
H01M 4/1391; H01M 4/1397; H01M 4/505;
H01M 4/525; H01M 4/58; H01M 4/62; Y02E 60/10

(86) International application number:
PCT/JP2024/030812

(87) International publication number:
WO 2025/047829 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.09.2023 JP 2023142150

(71) Applicant: ENEOS Materials Corporation
Tokyo 105-7109 (JP)

(72) Inventors:
• NAKAYAMA,Takuya
Tokyo 105-7109 (JP)
• MIYABE, Toshitaka
Tokyo 105-7109 (JP)
• Ota, Junya
Tokyo 105-7109 (JP)
• MASUDA, Kana
Tokyo 105-7109 (JP)
• MORI, Kazumasa
Tokyo 105-7109 (JP)

(74) Representative: Becker, Eberhard
Becker Kurig & Partner
Patentanwälte mbB
Bavariastraße 7
80336 München (DE)

(54) **BINDER COMPOSITION FOR POWER STORAGE DEVICES, SLURRY FOR POWER STORAGE DEVICE ELECTRODES, POWER STORAGE DEVICE ELECTRODE, AND POWER STORAGE DEVICE**

(57) The present invention provides a binder composition for power storage devices, the binder composition enabling the production of a power storage device electrode that has an excellent surface state, adhesion, and ion conductivity, and the binder composition being capable of improving the cycle life characteristics of the power storage device. A binder composition for power storage devices according to the present invention contains a polymer (A), a nonionic surfactant (B), and a liquid medium (C). When the total of the repeating units contained in the polymer (A) is taken as 100% by mass, the polymer (A) contains 1-50% by mass of a repeating unit (a1) that is derived from an $\alpha,\beta$-unsaturated nitrile compound and 40-80% by mass of a repeating unit (a2) that is derived from an unsaturated carboxylic acid ester. The content ratio of the nonionic surfactant (B) is 0.1-10 parts by mass relative to 100 parts by mass of the polymer (A), and the liquid medium (C) is composed of at least one substance that is selected from the group consisting of aliphatic hydrocarbons, alicyclic hydrocarbons, aromatic hydrocarbons, ketones, esters, ethers, glycol ethers, lactams, lactones, and amides.

EP 4 773 247 A1

## Description

Technical Field

The invention relates to a binder composition for a power storage device, a slurry for a power storage device electrode, a power storage device electrode, and a power storage device.

Related Art

In recent years, power storage devices having a high voltage and a high power density have been required as power sources for driving electronic components. As such power storage devices, lithium-ion batteries and lithium-ion capacitors are expected.

The electrodes used in such power storage devices are manufactured by coating and drying a composition (slurry for power storage device electrode) containing an active material and a polymer serving as a binder onto the surface of a current collector. Examples of properties required for the polymer to be used as a binder include the binding ability between active materials and the adhesion ability between the active material and the current collector. In addition, examples also include a powder falling resistance in which the fine powder of the active material does not fall off from the active material layer at the time of cutting the coated and dried composition coating film (hereinafter also referred to as "active material layer"). When such a binder material exhibits favorable adhesion to reduce the internal resistance of the battery caused by the binder material, favorable charge-discharge properties can be imparted to the power storage device.

It has been empirically clarified that the binding ability between active materials, the adhesion ability between the active material and the current collector, and the powder falling resistance are approximately proportional to each other in terms of performance quality. Therefore, in the specification, these properties may be collectively expressed using the term "adhesiveness ".

Recently, to produce an electrochemical device having an excellent capacity and charge-discharge cycle properties, the use of positive electrode active materials having high reactivity with water has been studied. In addition, polyvinylidene fluoride (PVdF) is most widely used as an organic solvent-based binder for power storage device electrodes. Although PVdF has favorable binding properties and oxidation resistance, it contains fluorine atoms and thus causes a high environmental load, and the instability in raw material supply also becomes apparent (for example, see Patent Document 1).

Under such background, various binder materials have been proposed to solve various problems of slurries for positive electrodes (for example, see Patent Documents 1 to 2).

Citation List

Patent Document(s)

Patent Document 1: Japanese Patent Application Laid-Open Publication No. H10-298386
Patent Document 2: Japanese Patent Application Laid-Open Publication No. 2019-194944

SUMMARY OF INVENTION

Technical Problem

However, in the method using a slurry for a positive electrode containing PVdF conventionally used or sulfonated PVdF disclosed in Patent Document 1 described above, it is known that a crosslinked body is formed accompanying dehydrofluorination (HF), particularly under a basic condition. When the crosslinked body is formed in the slurry for the positive electrode, the adhesiveness may be inhibited. In addition, when the conventionally used slurry for a positive electrode is coated, craters due to bubble breakage may occur on the surface of the coating film due to the influence of emulsifiers and the like remaining in the slurry. Such surface defects need to be prevented because the defects lead to a decrease in product yield.

Some embodiments according to the invention provide a binder composition for a power storage device capable of producing a power storage device electrode excellent in surface state, adhesiveness, and ion conductivity, and capable of improving cycle life properties of the power storage device.

Solution to Problem

The invention has been made to solve at least a portion of the issues, and can be realized as any of the following embodiments.

An aspect of a binder composition for a power storage device according to the invention includes: a polymer (A), a nonionic surfactant (B), and a liquid medium (C). When a total of repeating units included in the polymer (A) is 100 mass%, the polymer (A) includes: 1 mass% to 50 mass% of a repeating unit (a1) derived from an $\alpha,\beta$-unsaturated nitrile compound; and 40 mass% to 80 mass% of a repeating unit (a2) derived from an unsaturated carboxylic acid ester. A content ratio of the nonionic surfactant (B) is 0.1 parts by mass to 10 parts by mass with respect to 100 parts by mass of the polymer (A). The liquid medium (C) is at least one selected from a group consisting of aliphatic hydrocarbons, alicyclic hydrocarbons, aromatic hydrocarbons, ketones, esters, ethers, glycol ethers, lactams, lactones, and amides.

In an aspect of the binder composition for the power storage device, the polymer (A) is polymer particles, and a number average particle diameter of the polymer particles is 50 nm or more and 1,000 nm or less.

In any aspect of the binder composition for the power storage device, the polymer (A) further includes 0.1 mass% to 10 mass% of a repeating unit (a3) derived from an unsaturated carboxylic acid.

In any aspect of the binder composition for the power storage device, the polymer (A) further includes 0.1 mass% to 10 mass% of a repeating unit (a6) derived from (meth)acrylamide.

In any aspect of the binder composition for the power storage device, the polymer (A) further includes 0.1 mass% to 10 mass% of a repeating unit (a7) derived from a compound having a sulfonic acid group.

An aspect of a slurry for a power storage device electrode according to the invention includes: the binder composition for the power storage device according to any aspect; and an active material.

An aspect of the slurry for the power storage device electrode further includes a thickener.

In any aspect of the slurry for the power storage device electrode, the active material is a positive electrode active material.

In any aspect of the slurry for the power storage device electrode, the positive electrode active material includes at least one selected from a group consisting of lithium cobalt oxide, lithium nickel oxide, lithium manganese oxide, ternary nickel cobalt manganese oxide lithium, and an olivine-type lithium-containing phosphate compound.

An aspect of a power storage device electrode according to the invention includes: a current collector; and an active material layer formed by coating and drying the slurry for the power storage device electrode of any aspect to a surface of the current collector.

An aspect of a power storage device includes the power storage device electrode of the aspect.

Effects of Invention

According to the binder composition for the power storage device according to the disclosure, a power storage device electrode excellent in surface state, adhesiveness, and ion conductivity can be produced, and consequently, cycle life properties of the power storage device can be improved.

DESCRIPTION OF EMBODIMENTS

Hereinafter, exemplary embodiments according to the invention will be described in detail. It should be understood that the invention is not limited only to the embodiments described below, but also includes various modification examples implemented within a range that does not change the gist of the invention.

In the specification, "(meth)acrylic acid ..." represents "acrylic acid..." or "methacrylic acid...", "...(meth)acrylate" represents "...acrylate" or "...methacrylate", and "(meth)acrylamide" represents "acrylamide" or "methacrylamide".

In the specification, a numerical range described as "X to Y" is interpreted as including the numerical value X as a lower limit and including the numerical value Y as an upper limit.

1. Binder composition for power storage device

A binder composition for a power storage device according to an embodiment of the invention contains a polymer (A), a nonionic surfactant (B), and a liquid medium (C). The polymer (A) contains a repeating unit (a1) derived from an $\alpha,\beta$-unsaturated nitrile compound in an amount of 1 mass% to 50 mass% and a repeating unit (a2) derived from an unsaturated carboxylic acid ester in an amount of 40 mass% to 80 mass%, when the total of repeating units contained in the polymer (A) is 100 mass%. In addition, the content ratio of the nonionic surfactant (B) is 0.1 parts by mass to 10 parts by mass relative to 100 parts by mass of the polymer (A). Furthermore, the liquid medium (C) is at least one selected from a group consisting of aliphatic hydrocarbons, alicyclic hydrocarbons, aromatic hydrocarbons, ketones, esters, ethers, glycol ethers, lactams, lactones, and amides. Hereinafter, components contained in the binder composition for the power storage device according to the embodiment will be described in detail.

### 1.1. Polymer (A)

The binder composition for the power storage device according to the embodiment contains the polymer (A). The polymer (A) is preferably dispersed in a particulate state in a liquid medium (C) described later. In the state where the polymer (A) is dispersed in a particulate state in the liquid medium (C), the stability of a composition prepared by mixing with an active material (hereinafter also referred to as "slurry") becomes favorable, and the coatability of the slurry to a current collector becomes favorable, which is preferable. In addition, with the presence of a particulate binder, it becomes easy for the active material to slide easily during pressing, and the density is increased. Furthermore, excessive coating on the conductive additive can be suppressed, and a favorable conductive path can be formed.

Hereinafter, repeating units forming the polymer (A), the physical properties of the polymer (A), and the production method will be described in this order.

### 1.1.1. Repeating units constituting polymer (A)

The polymer (A) contains a repeating unit (a1) derived from an $\alpha,\beta$-unsaturated nitrile compound (hereinafter also referred to as "repeating unit (a1)") in an amount of 1 mass% to 50 mass% and a repeating unit (a2) derived from an unsaturated carboxylic acid ester (hereinafter also referred to as "repeating unit (a2)") in an amount of 40 mass% to 80 mass%, when the total of repeating units contained in the polymer (A) is 100 mass%. In addition, the polymer (A) may contain, in addition to the repeating unit (a1) and the repeating unit (a2), repeating units derived from other monomers copolymerizable therewith.

### 1.1.1.1. Repeating unit (a1) derived from $\alpha,\beta$-unsaturated nitrile compound

The content ratio of the repeating unit (a1) derived from an $\alpha,\beta$-unsaturated nitrile compound is 1 mass% to 50 mass% when the total of repeating units contained in the polymer (A) is 100 mass%. The content ratio of the repeating unit (a1) is preferably 2 mass% or more, and more preferably 3 mass% or more. The content ratio of the repeating unit (a1) is preferably 48 mass% or less, and more preferably 45 mass% or less. The content ratio of the repeating unit (a1) is preferably 2 mass% to 48 mass%, and more preferably 3 mass% to 45 mass%. With the polymer (A) containing the repeating unit (a1) within the range, the affinity between the polymer (A) and the liquid medium (C) becomes favorable, and the polymer (A) tends to maintain the particle shape. In addition, the affinity between the polymer (A) and the electrolyte solution becomes favorable, and an increase in internal resistance caused by the polymer (A) becoming an electrical resistance component in the power storage device can be suppressed.

The $\alpha,\beta$-unsaturated nitrile compound is not particularly limited, and examples thereof include acrylonitrile, methacrylonitrile, $\alpha$-chloroacrylonitrile, $\alpha$-ethylacrylonitrile, vinylidene cyanide, and the like, and one or more selected from these can be used. Among these, one or more selected from the group consisting of acrylonitrile and methacrylonitrile is preferred, and acrylonitrile is particularly preferred.

### 1.1.1.2. Repeating unit (a2) derived from unsaturated carboxylic acid ester

The content ratio of the repeating unit (a2) derived from the unsaturated carboxylic acid ester is 40 mass% to 80 mass% when the total of repeating units contained in the polymer (A) is 100 mass%. The content ratio of the repeating unit (a2) is preferably 43 mass% or more, and more preferably 45 mass% or more. The content ratio of the repeating unit (a2) is preferably 75 mass% or less, and more preferably 70 mass% or less. The content ratio of the repeating unit (a2) is preferably 43 mass% to 75 mass%, and more preferably 45 mass% to 70 mass%. When the polymer (A) contains the repeating unit (a2) within the range, the affinity between the polymer (A) and the electrolyte solution becomes favorable, and an increase in internal resistance caused by the polymer (A) becoming an electrical resistance component in the power storage device can be suppressed.

Among unsaturated carboxylic acid esters, (meth)acrylic acid esters can be preferably used. Specific examples of (meth)acrylic acid esters include, for example, methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, glycerin mono(meth)acrylate, and glycerin di(meth)acrylate, and one or more selected from these can be used. Among these, one or more selected from methyl (meth)acrylate, ethyl (meth)acrylate, n-butyl (meth)acrylate, 2-ethylhexyl (meth) acrylate, cyclohexyl (meth)acrylate, ethylene glycol di(meth)acrylate, and 2-hydroxyethyl (meth)acrylate is preferable, and methyl (meth)acrylate is particularly preferable.

1.1.1.3. Other repeating units

The polymer (A) may contain, in addition to the repeating unit (a1) and the repeating unit (a2), repeating units derived from other monomers copolymerizable therewith. Examples of such repeating units include a repeating unit (a3) derived from an unsaturated carboxylic acid (hereinafter also referred to as "repeating unit (a3)"), a repeating unit (a4) derived from an aromatic vinyl compound (hereinafter also referred to as "repeating unit (a4)"), a repeating unit (a5) derived from a conjugated diene compound (hereinafter also referred to as "repeating unit (a5)"), a repeating unit (a6) derived from (meth)acrylamide (hereinafter also referred to as "repeating unit (a6)"), a repeating unit (a7) derived from a compound having a sulfonic acid group (hereinafter also referred to as "repeating unit (a7)"), and a repeating unit derived from a cationic monomer.

<Repeating unit (a3) derived from unsaturated carboxylic acid>

The polymer (A) may contain a repeating unit (a3) derived from an unsaturated carboxylic acid. The content ratio of the repeating unit (a3) derived from an unsaturated carboxylic acid is preferably 0.1 mass% to 10 mass% when the total of the repeating units contained in the polymer (A) is 100 mass%. The content ratio of the repeating unit (a3) is more preferably 0.5 mass% or more, and particularly preferably 1 mass% or more. The content ratio of the repeating unit (a3) is more preferably 9 mass% or less, and particularly preferably 8 mass% or less. The content ratio of the repeating unit (a3) is preferably 0.5 mass% to 9 mass%, and more preferably 1 mass% to 8 mass%. With the polymer (A) containing the repeating unit (a3) within the above range, the adhesiveness between the current collector and the active material layer can be improved, and the adhesion strength of the electrode may be improved.
The unsaturated carboxylic acid is not particularly limited, and examples thereof include monocarboxylic acids and dicarboxylic acids (including anhydrides) such as acrylic acid, methacrylic acid, crotonic acid, maleic acid, fumaric acid, and itaconic acid, and one or more selected from these may be used. Among these, it is preferable to use one or more selected from acrylic acid, methacrylic acid, and itaconic acid.

<Repeating unit (a4) derived from aromatic vinyl compound>

The content ratio of the repeating unit (a4) derived from an aromatic vinyl compound is preferably 1 mass% to 50 mass% when the total of the repeating units contained in the polymer (A) is 100 mass%. The content ratio of the repeating unit (a4) is more preferably 3 mass% or more, and particularly preferably 5 mass% or more. The content ratio of the repeating unit (a4) is more preferably 47 mass% or less, and particularly preferably 45 mass% or less. The content ratio of the repeating unit (a4) is preferably 3 mass% to 47 mass%, and more preferably 5 mass% to 45 mass%. With the polymer (A) containing the repeating unit (a4) within the range, fusion between the polymers (A) dispersed in the active material layer is suppressed, favorable slurry properties are exhibited, and coatability can be improved. In addition, since the permeability of the electrolyte solution can be improved, favorable repeated charge-discharge properties can be exhibited.
The aromatic vinyl compound is not particularly limited, and examples thereof include styrene, α-methylstyrene, p-methylstyrene, chlorostyrene, and divinylbenzene, and one or more selected from these may be used. Among these, styrene is particularly preferable.

<Repeating unit (a5) derived from conjugated diene compound>

The content ratio of the repeating unit (a5) derived from a conjugated diene compound is preferably 0 mass% to 5 mass% when the total of the repeating units contained in the polymer (A) is 100 mass%. The content ratio of the repeating unit (a5) is more preferably 0.5 mass% or more, and particularly preferably 1 mass% or more. The content ratio of the repeating unit (a5) is more preferably 4 mass% or less, and particularly preferably 3 mass% or less. The content ratio of the repeating unit (a5) is preferably 0.5 mass% to 4 mass%, and more preferably 1 mass% to 3 mass%. With the polymer (A) containing the repeating unit (a5) within the range, the dispersibility of the active material and filler becomes favorable, and preparation of a homogeneous active material layer and a protective film becomes possible, so that structural defects in the electrode plate can be eliminated, and favorable repetitive charge-discharge properties can be exhibited. In addition, stretchability can be imparted to the polymer (A) covering the surface of the active material, and since the adhesiveness can be improved by stretching or contracting the polymer (A), favorable charge-discharge durability properties can be exhibited.
The conjugated diene compound is not particularly limited, and examples thereof include 1,3-butadiene, 2-methyl-1,3-butadiene, 2,3-dimethyl-1,3-butadiene, 2-chloro-1,3-butadiene, 1,3-pentadiene, 1,3-hexadiene, and 1,3-heptadiene, and one or more selected from these may be used. Among these, 1,3-butadiene is particularly preferable.

<Repeating unit (a6) derived from (meth)acrylamide>

The polymer (A) may contain a repeating unit (a6) derived from (meth)acrylamide. The content ratio of the repeating unit (a6) derived from (meth)acrylamide is preferably 0.1 mass% to 10 mass% when the total of the repeating units contained in the polymer (A) is 100 mass%. The content ratio of the repeating unit (a6) is more preferably 0.5 mass% or more, and particularly preferably 1 mass% or more. The content ratio of the repeating unit (a6) is more preferably 9 mass% or less, and particularly preferably 8 mass% or less. The content ratio of the repeating unit (a6) is preferably 0.5 mass% to 9 mass%, and more preferably 1 mass% to 8 mass%. With the polymer (A) containing the repeating unit (a6) within the range, the dispersibility of the active material and the filler in the slurry may become favorable. In addition, the flexibility of the obtained active material layer may become appropriate, and the adhesiveness between the current collector and the active material layer may be improved.

The (meth)acrylamide is not particularly limited, and examples thereof include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, and maleic acid amide, and one or more selected from these can be used. Among these, acrylamide and methacrylamide are particularly preferable.

<Repeating unit (a7) derived from compound having sulfonic acid group>

The polymer (A) may contain a repeating unit (a7) derived from a compound having a sulfonic acid group. The content ratio of the repeating unit (a7) derived from a compound having a sulfonic acid group is preferably 0.1 mass% to 10 mass% when the total of the repeating units contained in the polymer (A) is 100 mass%. The content ratio of the repeating unit (a7) is more preferably 0.5 mass% or more, and particularly preferably 1 mass% or more. The content ratio of the repeating unit (a7) is more preferably 9 mass% or less, and particularly preferably 8 mass% or less. The content ratio of the repeating unit (a7) is preferably 0.5 mass% to 9 mass%, and more preferably 1 mass% to 8 mass%. With the polymer (A) containing the repeating unit (a7) within the range, the dispersibility of the active material and the filler may become favorable, and a homogeneous active material layer and protective film may be obtained. Furthermore, in the case where the adhesiveness between the current collector and the active material layer becomes favorable, structural defects in the electrode plate may be eliminated, and favorable charge-discharge properties may be exhibited.

The compound having a sulfonic acid group is not particularly limited, and examples thereof include compounds such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, acrylamide tert-butylsulfonic acid, 2-hydroxy-3-acrylamidopropanesulfonic acid, and 3-allyloxy-2-hydroxypropanesulfonic acid, as well as alkali salts thereof, and one or more selected from these can be used. Among these, styrenesulfonic acid is particularly preferable.

<Repeating unit derived from cationic monomer>

The polymer (A) may contain a repeating unit derived from a cationic monomer. The cationic monomer is not particularly limited, and is preferably at least one monomer selected from the group consisting of secondary amines (salts), tertiary amines (salts), and quaternary ammonium salts. Specific examples of the cationic monomer include 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichloromide, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-ynyl)-N-methyl-1-naphthylmethylamine hydrochloride, and one or more selected from these can be used.

1.1.2. Physical properties of polymer (A)

<Number average particle diameter>

In the case where the polymer (A) are particles, the number average particle diameter of the particles is preferably 50 nm or more and 1,000 nm or less, more preferably 70 nm or more and 950 nm or less, and particularly preferably 90 nm or more and 900 nm or less. When the number average particle diameter of the particles of the polymer (A) is within the range, the particles of the polymer (A) tend to be adsorbed on the surface of the active material, so the particles of the polymer (A) can follow and move along with the movement of the active material. As a result, migration can be suppressed, so deterioration of electrical properties may thus be reduced.

The number average particle diameter of the particles of the polymer (A) is an average value of the particle diameters measured by a concentrated system particle size analyzer using dynamic light scattering (DLS). Examples of the concentrated system particle size analyzer include "FPA-1000" manufactured by Otsuka Electronics Co., Ltd.

1.1.3. Method for producing polymer (A)

<Polymerization step>

Regarding the method for producing the polymer (A), an emulsion polymerization method can be used, which is performed in the presence of the nonionic surfactant (B), other emulsifiers, chain transfer agents, polymerization initiators, and the like.

As the nonionic surfactant (B), one or more selected from the compounds described in "1.2. Nonionic Surfactant (B)" described later can be used.

Examples of other emulsifiers include sulfate ester salts of higher alcohols, alkylbenzene sulfonates, alkylnaphthalene sulfonates, alkyldiphenyl ether disulfonates, aliphatic sulfonates, aliphatic carboxylates, dehydroabietic acid salts, naphthalene sulfonic acid-formalin condensates, and fluorine-based surfactants such as perfluorobutyl sulfonates, phosphate esters containing perfluoroalkyl groups, carboxylates containing perfluoroalkyl groups, and perfluoroalkyl ethylene oxide adducts, and one or more selected from these can be used.

As specific examples of the chain transfer agent and the polymerization initiator, compounds described in Japanese Patent No. 5999399 and the like can be used.

The emulsion polymerization method for synthesizing the polymer (A) may be performed by single-stage polymerization or by multi-stage polymerization of two or more stages.

In the case where the synthesis of the polymer (A) is performed through single-stage polymerization, the monomer mixture can be subjected to emulsion polymerization in the presence of the nonionic surfactant (B), other emulsifiers, chain transfer agents, polymerization initiators, and the like, preferably at a temperature of 0°C to 80°C, and preferably for a polymerization time of 4 hours to 36 hours.

In the case where the synthesis of the polymer (A) is performed through two-stage polymerization, it is preferable to set the polymerization at each stage as follows.

- The usage proportion of the monomer used in the first-stage polymerization is preferably in the range of 20% by mass to 99% by mass, and more preferably in the range of 25% by mass to 99% by mass, relative to the total mass of the monomers (the sum of the mass of the monomer used in the first-stage polymerization and the mass of the monomer used in the second-stage polymerization). By performing the first-stage polymerization at such a usage proportion of the monomer, particles of the polymer (A) having excellent dispersion stability and being less likely to form aggregates can be obtained, and the increase in viscosity over time of the binder composition for the power storage device after coagulation can also be suppressed, which is preferable.

The type of monomer used in the second-stage polymerization and the usage proportion thereof may be the same as or different from the type of monomer used in the first-stage polymerization and the usage proportion thereof.

From the viewpoint of dispersibility of the particles of the polymer (A) to be obtained, the polymerization conditions at the respective stages are preferably set as follows.

· First-stage polymerization: preferably at a temperature of 0°C to 80°C, preferably for a polymerization time of 2 hours to 36 hours, preferably at a polymerization conversion rate of 50% by mass or more, more preferably 60% by mass or more.
· Second-stage polymerization: preferably at a temperature of 0°C to 80°C, preferably for a polymerization time of 2 hours to 18 hours.

In the case where the synthesis of the polymer (A) is performed through three-stage polymerization, it is preferable to set the polymerization at each stage as follows.

The usage proportion of the monomer used in the first-stage polymerization is preferably in the range of 20% by mass to 90% by mass, and more preferably in the range of 25% by mass to 80% by mass, relative to the total mass of the monomers (the sum of the mass of the monomer used in the first-stage polymerization, the mass of the monomer used in the second-stage polymerization, and the mass of the monomer used in the third-stage polymerization). By performing the first-stage polymerization at such a usage proportion of the monomer, particles of the polymer (A) having excellent dispersion stability and being less likely to form aggregates can be obtained, and the increase in viscosity over time of the binder composition for the power storage device after coagulation can also be suppressed, which is preferable.

The type of monomer used in the second-stage polymerization and the usage proportion thereof may be the same as or different from the type of monomer used in the first-stage polymerization and the usage proportion thereof.

The type of monomer used in the third-stage polymerization and the usage proportion thereof may be the same as or different from the type of monomer used in the first-stage polymerization and the usage proportion thereof, and the type of monomer used in the second-stage polymerization and the usage proportion thereof.

From the viewpoint of dispersibility of the particles of the polymer (A) to be obtained, the polymerization conditions at the respective stages are preferably set as follows.

· First-stage polymerization: preferably at a temperature of 0°C to 80°C, preferably for a polymerization time of 2 hours to 36 hours, preferably at a polymerization conversion rate of 50% by mass or more, more preferably 60% by mass or more.
· Second-stage polymerization: preferably at a temperature of 0°C to 80°C, preferably for a polymerization time of 2 hours to 18 hours.
· Third-stage polymerization: preferably at a temperature of 0°C to 80°C, preferably for a polymerization time of 2 hours to 9 hours.

By setting the total solid content concentration in the emulsion polymerization to 50% by mass or less, the polymerization reaction can proceed in a state where the dispersion stability of the particles of the polymer (A) to be obtained is favorable. This total solid content concentration is preferably 45% by mass or less, and more preferably 40% by mass or less.

Regardless of whether the synthesis of the polymer (A) is performed through single-stage polymerization or through multi-stage polymerization, it is preferable to add a neutralizing agent to the polymerization mixture after completion of the emulsion polymerization to perform neutralization. The neutralizing agent used here is not particularly limited, and examples include metal hydroxides such as sodium hydroxide and potassium hydroxide; ammonia; and the like.

The binder composition for the power storage device according to the embodiment is obtained, for example, by replacing the dispersion medium of a latex aqueous dispersion produced in an aqueous dispersion medium and dispersing it in the liquid medium (C) that is an organic dispersion medium. In this method, it is necessary to remove water. In the case where the boiling point of the liquid medium (C) is higher than the boiling point of water, the liquid medium (C) may be added to the obtained latex aqueous dispersion, and water may be evaporated and removed by using an evaporator or the like. In the case where the liquid medium (C) forms an azeotrope with water, the liquid medium (C) may be added to the obtained latex aqueous dispersion to form an azeotrope with water, and after the amount of water is reduced to some extent by an evaporator or the like, water may be removed by using a water absorbent such as molecular sieves or using a reverse osmosis membrane.

As another method for producing the binder composition for the power storage device according to the embodiment, a method is provided in which the polymer (A) produced in the aqueous dispersion medium is once coagulated and dried, then pulverize and dispersed in the liquid medium (C), or a method is provided in which the coagulated and dried polymer (A) is mixed with the liquid medium (C) and then pulverized. Dispersion can be performed by using ordinary dispersing machines such as ball mills and sand mills; ultrasonic dispersing machines; homogenizers; and the like. Furthermore, in the case where the polymer (A) is produced in the liquid medium (C) and a bulk polymer (A) is obtained, a particle dispersion of the polymer (A) dispersed in the liquid medium (C) can also be obtained by pulverizing using a dispersing machine such as a ball mill or sand mill.

1.2. Nonionic surfactant (B)

The binder composition for the power storage device according to the embodiment contains the nonionic surfactant (B). The content ratio of the nonionic surfactant (B) is preferably 0.1 parts by mass to 10 parts by mass, more preferably 0.5 parts by mass to 9 parts by mass, and particularly preferably 1 part by mass to 8 parts by mass, relative to 100 parts by mass of the polymer (A). It has been found that, with the nonionic surfactant (B) within the range, the polymer (A) can easily maintain its particle shape in the liquid medium (C). Since the nonionic surfactant (B) has high affinity with both the polymer (A) and the liquid medium (C), the nonionic surfactant (B) adsorbed on the particle interface of the polymer (A) has mobility in the liquid medium (C), and it is considered that the steric hindrance thereof can maintain the particle shape without causing aggregation of the polymer (A). Since the polymer (A) can maintain its particle shape, excessive coating on the positive electrode active material and conductive additive can be suppressed, and a good conductive path can be formed. Furthermore, flexibility and adhesion derived from the particles can be imparted.

As described above, at the time of polymerizing the polymer (A), the nonionic surfactant (B) and other emulsifiers are used, but the amount of the residual emulsifier varies depending on the conditions of the subsequent coagulation process, the washing process, and the like. Therefore, it is common that the residual emulsifier is not appropriately managed. It has been found that the binder composition for the power storage device according to the embodiment exhibits good battery properties by appropriately managing the content ratio of the nonionic surfactant (B) in the manufacturing process. That is, when the content ratio of the nonionic surfactant (B) is equal to or less than the upper limit value, the occurrence of craters due to bubble breakage derived from the emulsifier on the surface of the slurry coating film can be effectively suppressed. In addition, when the content ratio of the nonionic surfactant (B) is equal to or greater than the lower limit value, the polymer (A) can maintain its particle shape in the liquid medium (C), and a good conductive path is formed in the electrode layer, thereby suppressing an increase in internal resistance, so good repeated charge-discharge properties are exhibited. In particular, when the electrode layer can no longer maintain the electron conductive path, the lithium-ion conductivity decreases and the resistance increases, so it is important to suppress the inhibition of the conductive path due to fusion of the polymer (A) particles with each other.

Examples of the nonionic surfactant (B) include ether-type nonionic surfactants, ester-type nonionic surfactants, and ester-ether-type nonionic surfactants.

Examples of the ether-type nonionic surfactant include polyoxyalkylene glycol (for example, polyoxyethylene polyoxypropylene glycol) and a type in which an oxyalkylene group (for example, ethylene oxide) is added to a hydrocarbon group having a hydroxyl group (for example, polyoxyalkylene alkyl ether such as polyoxyethylene alkyl ether; polyoxyalkylene phenyl ether such as polyoxyethylene phenyl ether, polyoxyethylene alkyl phenyl ether, and polyoxyethylene styrenated phenyl ether). Examples of the hydrocarbon group having a hydroxyl group include alcohol compounds and phenol compounds. Examples of the alcohol compound include linear alkyl alcohols such as methanol, ethanol, propanol, butanol, pentanol, hexanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol; branched alkyl alcohols such as isopropanol, isobutanol, isohexanol, 2-ethylhexanol, isononanol, isodecanol, isotridecanol, isotetradecanol, isotriacontanol, isohexadecanol, isoheptadecanol, isooctadecanol, isononadecanol, isoeicosanol, isoheneicosanol, isodocosanol, isotricosanol, isotetracosanol, isopentacosanol, isohexacosanol, isoheptacosanol, isooctacosanol, isononacosanol, and isopentadecanol; linear alkenyl alcohols such as tetradecenol, hexadecenol, heptadecenol, octadecenol, and nonadecenol; branched alkenyl alcohols such as isohexadecenol and isooctadecenol; cyclic alkyl alcohols such as cyclopentanol and cyclohexanol; and aromatic alcohols such as benzyl alcohol. Examples of the phenol compound include phenol, alkylphenol, monostyrenated phenol, distyrenated phenol, and tristyrenated phenol. Among these, a chain higher alcohol having 10 to 20 carbon atoms is preferable, and the number of carbon atoms of the higher alcohol may be 11 to 17, or may be 11 to 15 (further 12 to 13).

Examples of the ester-type nonionic surfactant include a type having an ester bond between a polyhydric alcohol and a higher fatty acid. Examples of the polyhydric alcohol include ethylene glycol, propylene glycol, 1,3-propanediol, 1,2-butanediol, 1,3-butanediol, 1,4-butanediol, 2-methyl-1,2-propanediol, 1,5-pentanediol, 1,6-hexanediol, 2,5-hexanediol, 2-methyl-2,4-pentanediol, 2,3-dimethyl-2,3-butanediol, 2-methyl-2-hydroxymethyl-1,3-propanediol, 2-ethyl-2-hydroxymethyl-1,3-propanediol, trimethylolpropane, sorbitan, pentaerythritol, sorbitol, glycerin, and sucrose. Examples of the higher fatty acid include linear alkyl carboxylic acids such as octylic acid, nonanoic acid, decanoic acid, undecanoic acid, dodecanoic acid (lauric acid), tridecanoic acid, tetradecanoic acid (myristic acid), pentadecanoic acid, hexadecanoic acid, heptadecanoic acid, octadecanoic acid (stearic acid), nonadecanoic acid, eicosanoic acid, heneicosanoic acid, and docosanoic acid; branched alkyl carboxylic acids such as 2-ethylhexanoic acid, isododecanoic acid, isotridecanoic acid, isotetradecanoic acid, isohexadecanoic acid, and isooctadecanoic acid; and linear alkenyl carboxylic acids such as octadecenoic acid, octadecadienoic acid, octadecatrienoic acid, and oleic acid. Among these, oleic acid, stearic acid, lauric acid, and myristic acid are preferable. Examples of the ester-type nonionic surfactant include polyglycerin fatty acid ester, polysorbitan fatty acid ester, and sucrose fatty acid ester.

Examples of the ester-ether-type nonionic surfactant include a type having both an ester bond and an ether bond in the molecule (for example, fatty acid methyl ester ethoxylate). Examples of the ester-ether-type nonionic surfactant include a type in which ethylene oxide is added to an ester of a polyhydric alcohol such as glycerin or sorbitol and a fatty acid, fatty acid polyethylene glycol, and fatty acid polyoxyethylene sorbitan.

Among these, ether-type nonionic surfactants are preferred, polyoxyalkylene alkyl ethers and polyoxyalkylene phenyl ethers are more preferred, and polyoxyethylene alkyl ethers, polyoxyethylene alkylphenyl ethers, and polyoxyethylene distyrenated phenyl ethers are particularly preferred.

1.3. Liquid medium (C)

The binder composition for the power storage device according to the embodiment contains the liquid medium (C). The liquid medium (C) is not particularly limited, and examples thereof include aliphatic hydrocarbons such as hexane, heptane, octane, decane, and dodecane; alicyclic hydrocarbons such as cyclohexane, cycloheptane, cyclooctane, and cyclodecane; aromatic hydrocarbons such as toluene, xylene, mesitylene, naphthalene, and tetralin; ketones such as methyl hexyl ketone and dipropyl ketone; esters such as butyl acetate, butyl butyrate, and methyl butanoate; ethers such as dibutyl ether, tetrahydrofuran, and anisole; lactams such as β-lactam, γ-lactam, σ-lactam, N-methyl-2-pyrrolidone, and 2-pyrrolidone; glycol ethers such as (mono-, di-, tri-, or poly-)ethylene glycol monomethyl ether, (mono-, di-, tri-, or poly-) ethylene glycol dimethyl ether, and ethylene glycol phenyl ether; lactones such as α-acetolactone, β-propiolactone, γ-butyrolactone, δ-valerolactone, and ε-caprolactone; and amides such as N-methylacetamide, dimethylacetamide, N-methylformamide, and dimethylformamide. These liquid media (C) may be used alone or in combination of two or more.

The liquid medium (C) may contain water as long as an organic solvent is the main solvent. "An organic solvent is the main solvent" means that the organic solvent accounts for more than 50 mass% when the total mass of the liquid medium (C) is 100 mass%.

1.4. Other additives

The binder composition for the power storage device according to the embodiment may contain additives other than the components described above as needed. Examples of such additives include polymers other than the polymer (A) and preservatives.

<Polymer other than polymer (A)>

The binder composition for power storage device according to the embodiment may contain a polymer other than the polymer (A). Such a polymer is not particularly limited, and examples thereof include acrylic polymers containing unsaturated carboxylic acid esters soluble in the liquid medium (C) or derivatives thereof as constituent units, styrene-butadiene polymers containing conjugated dienes as constituent units, acrylonitrile-butadiene copolymers, and fluorine-based polymers such as polyvinylidene fluoride (PVDF). These polymers may be used alone or in combination of two or more. By containing these polymers, favorable slurry properties may be obtained, and the flexibility and adhesiveness of the electrode may be further improved.

<Preservative>

The binder composition for the power storage device according to the embodiment may contain a preservative. By containing a preservative, when the binder composition for the power storage device is stored, proliferation of bacteria and mold and generation of foreign matter may be suppressed. Specific examples of the preservative include compounds described in Japanese Patent No. 5477610 and the like.

2. Slurry for power storage device

The slurry for the power storage device according to an embodiment of the invention contains the binder composition for the power storage device described above. The binder composition for the power storage device described above can be used as a material for producing a protective film for suppressing short-circuiting caused by dendrites generated during charge and discharge, and can also be used as a material for producing a power storage device electrode (active material layer) with an improved binding ability between active materials, adhesion ability between active materials and current collector, and powder falling resistance. Hereinafter, the slurry for the power storage device for producing a protective film (hereinafter also referred to as "slurry for the protective film") and the slurry for the power storage device for producing an active material layer of a power storage device electrode (hereinafter also referred to as "slurry for the power storage device electrode") will be described separately.

Slurry for protective film

The "slurry for the protective film" refers to a dispersion liquid used for producing a protective film on the surface of an electrode or a separator or both by coating the slurry to the surface of an electrode or a separator or both and then drying the slurry. The slurry for the protective film according to the embodiment may be formed by only the binder composition for power storage device described above, or may further contain an inorganic filler. Examples of the inorganic filler include the inorganic fillers described in Japanese Patent Application Laid-Open Publication No. 2020-184461.

2.2. Slurry for power storage device electrode

The "slurry for the power storage device electrode" refers to a dispersion liquid used for producing an active material layer on the surface of a current collector by coating the slurry to the surface of the current collector and then drying the slurry. The slurry for the power storage device electrode according to the embodiment contains the binder composition for the power storage device described above and an active material.

Hereinafter, the components contained in the slurry for the power storage device electrode according to the embodiment will be described.

2.2.1. Polymer (A)

The composition, physical properties, production method, and the like of the polymer (A) are as described above, and therefore the description thereof is omitted.

The content ratio of the polymer component in the slurry for the power storage device electrode according to the embodiment is preferably 1 part by mass to 8 parts by mass, more preferably 1 part by mass to 7 parts by mass, and particularly preferably 1.5 parts by mass to 6 parts by mass, relative to 100 parts by mass of the active material. When the content ratio of the polymer component is within the range, the dispersibility of the active material in the slurry becomes favorable, and the coating property of the slurry also becomes excellent. Here, the polymer component includes the polymer (A) and polymers other than the polymer (A) that are added as needed.

2.2.2. Active material

Examples of the active material used in the slurry for the power storage device electrode according to the embodiment include a positive electrode active material and a negative electrode active material. Specific examples thereof include, for example, carbon materials, silicon materials, oxides containing lithium atoms, sulfur compounds, lead compounds, tin compounds, arsenic compounds, antimony compounds, aluminum compounds, conductive polymers such as polyacene, composite metal oxides represented by $A_XB_YO_Z$ (where A is an alkali metal or a transition metal, B is at least one selected from transition metals such as cobalt, nickel, aluminum, tin, and manganese, O represents an oxygen atom, and X, Y, and Z are numbers in the ranges of $1.10>X>0.05$, $4.00>Y>0.85$, and $5.00>Z>1.50$, respectively), and other metal oxides. Examples of the composite metal oxide include lithium cobalt oxide, lithium nickel oxide, lithium manganese oxide, and ternary nickel cobalt manganese oxide lithium.

The slurry for the power storage device electrode according to the embodiment can be used in preparing either a positive electrode or a negative electrode, but is particularly preferably used for a positive electrode.

The positive electrode active material preferably contains at least one selected from the group consisting of lithium cobalt oxide, lithium nickel oxide, lithium manganese oxide, ternary nickel cobalt manganese oxide lithium, and an olivine-type lithium-containing phosphate compounds, more preferably contains at least one selected from the group consisting of lithium cobalt oxide, lithium nickel oxide, lithium manganese oxide, and ternary nickel cobalt manganese oxide lithium, and particularly preferably contains ternary nickel cobalt manganese oxide lithium.

The power storage device electrode prepared by using the slurry for the power storage device electrode according to the embodiment can exhibit favorable electrical properties even when such positive electrode active material is used. The reason for this is considered to be that the polymer (A) can firmly bind the positive electrode active material and, at the same time, can maintain the state in which the positive electrode active material is firmly bound even during charge and discharge.

The average particle diameter of the positive electrode active material is preferably in the range of 0.5 μm to 30 μm, more preferably in the range of 0.5 μm to 25 μm, and particularly preferably in the range of 0.5 μm to 20 μm.

Meanwhile, in the case of preparing a negative electrode, among the active materials exemplified above, those containing a silicon material and/or a carbon material are preferable, and a mixture of a silicon material and a carbon material is more preferable. Since the silicon material has a larger lithium storage capacity per unit weight than other active materials, the storage capacity of the resulting power storage device can be increased, and, as a result, the output and energy density of the power storage device can be increased. On the other hand, since the carbon material has a smaller volume change accompanying charge and discharge than the silicon material, by using a mixture of a silicon material and a carbon material as the negative electrode active material, the influence of the volume change of the silicon material can be mitigated, and the adhesion capability between the active material layer and the current collector can be further improved.

2.2.3. Other components

In addition to the components described above, components such as a polymer other than the polymer (A), a liquid medium, a conductive additive, a corrosion inhibitor, and cellulose fiber may be added as needed to the slurry for power storage device electrode according to the embodiment. As the polymer other than the polymer (A), those can be appropriately selected from the compounds exemplified in "1.4. Other additives" above and used for the same purpose.

<Liquid medium>

To the slurry for power storage device electrode according to the embodiment, a liquid medium may be further added in addition to the amount carried over from the binder composition for the power storage device. The liquid medium to be added may be the same as or different from the liquid medium (C) contained in the binder composition for power storage device, but it is preferable to select and use from the liquid media exemplified in the section "1.3. Liquid medium (C)" above.

The content ratio of the liquid medium (including the amount carried over from the binder composition for the power storage device) in the slurry for the power storage device electrode according to the embodiment is preferably such that the solid content concentration in the slurry (referring to the ratio of the total mass of components other than the liquid medium in the slurry to the total mass of the slurry; the same applies hereinafter) is 30 mass% to 90 mass%, and more preferably 40 mass% to 80 mass%.

<Conductive additive>

To the slurry for the power storage device electrode according to the embodiment, a conductive additive may be further added for the purpose of imparting conductivity and buffering the volume change of the active material due to the entry and exit of lithium ions.

Specific examples of the conductive additive include carbon such as activated carbon, acetylene black, Ketjen black, furnace black, graphite, carbon fiber, fullerene, and carbon nanotube. Among these, acetylene black, Ketjen black, or carbon nanotube can be preferably used. The content ratio of the conductive additive is preferably 20 parts by mass or less, more preferably 1 part by mass to 15 parts by mass, and particularly preferably 2 parts by mass to 10 parts by mass, relative to 100 parts by mass of the active material.

<Corrosion inhibitor>

To the slurry for the power storage device electrode according to the embodiment, a corrosion inhibitor may be further added for the purpose of suppressing corrosion of the current collector in accordance with the type of active material.

Examples of the corrosion inhibitor include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Among these, ammonium paratungstate, ammonium metavanadate, sodium metavanadate, potassium metavanadate, and ammonium molybdate are preferred.

<Cellulose fiber>

To the slurry for power storage device electrode according to the embodiment, cellulose fiber may be further added. As the cellulose fiber, conventional ones can be used. By adding cellulose fiber, the adhesiveness of the active material to the current collector may be improved in some cases. It is considered that fibrous cellulose fiber binds adjacent active materials to each other in a fibrous manner through line adhesion or line contact, thereby preventing the active material from falling off and improving the adhesiveness to the current collector.

2.2.4. Method for preparing slurry for power storage device electrode

The slurry for the power storage device electrode according to the embodiment may be produced by any method as long as the slurry contains the binder composition for the power storage device and the active material. From the viewpoint of producing a slurry having better dispersibility and stability more efficiently and at a lower cost, it is preferred to produce the slurry by adding the active material and arbitrary additive components used as needed to the binder composition for the power storage device, and mixing the materials. As a specific production method, for example, the method described in Japanese Patent No. 5999399 and the like can be listed.

3. Power storage device electrode

The power storage device electrode according to an embodiment of the invention includes the current collector and the active material layer formed by coating and drying the slurry for the power storage device electrode on the surface of the current collector. Such power storage device electrode can be produced by coating the slurry for the power storage device electrode to the surface of the current collector such as a metal foil to form a coating film, and then drying the coating film to form the active material layer. The power storage device electrode produced in this manner has an active material layer containing the polymer (A), the active material, and optional components added as needed, bound to the surface of the current collector, and therefore has excellent adhesiveness. In addition, since the expansion of the electrode accompanying repeated charge and discharge is suppressed, the electrode has excellent charge-discharge durability properties.

The current collector is not particularly limited as long as it is made of a conductive material, and examples include the current collector described in Japanese Patent No. 5999399 and the like.

4. Power storage device

The power storage device according to an embodiment of the invention includes the power storage device electrode, further contains an electrolyte solution, and can be produced according to a conventional method using components such as a separator. As a specific production method, examples may include a method in which a negative electrode and a positive electrode are stacked with a separator interposed therebetween, wound or folded according to the battery shape, and accommodated in a battery container, and the electrolyte solution is injected into the battery container and sealed. The shape of the battery can be an appropriate shape such as a coin type, a cylindrical type, a prismatic type, or a laminate type.

The electrolyte solution may be liquid- or gel-like, and may be selected from conventional electrolyte solutions used in power storage devices according to the type of active material, so as to effectively exhibit the function as a battery. The electrolyte solution can be a solution in which an electrolyte is dissolved in an appropriate solvent. Examples of such electrolyte and solvent include those described in Japanese Patent No. 5999399 and the like.

The power storage device is applicable to a lithium-ion secondary battery, an electric double layer capacitor, a lithium-ion capacitor, and the like that require discharge at a high current density. Among these, a lithium-ion secondary battery is particularly preferred. In the power storage device electrode and the power storage device according to the embodiment, members other than the binder composition for the power storage device can be conventional members for lithium-ion secondary batteries, electric double layer capacitors, or lithium-ion capacitors.

5. Examples

Hereinafter, the invention will be specifically described based on Examples, but the invention is not limited to these Examples. "Parts" and "%" in Examples and Comparative Examples are based on mass unless otherwise specified.

5.1. Examples 1 to 12, Comparative Examples 1 to 6

5.1.1. Preparation of binder composition for power storage device

<Example 1>

A polymer (A1) dispersion was obtained through single-stage polymerization as shown below. To a reactor, 300 parts by mass of water, a monomer mixture consisting of 1 part by mass of acrylonitrile, 5 parts by mass of methyl methacrylate, 5 parts by mass of butyl acrylate, 58 parts by mass of 2-ethylhexyl acrylate, 2 parts by mass of allyl methacrylate, 25 parts by mass of styrene, 1 part by mass of acrylic acid, 1 part by mass of methacrylic acid, 1 part by mass of acrylamide, and 1 part by mass of sodium styrenesulfonate, 0.01 parts by mass of tert-dodecyl mercaptan as a chain transfer agent, 0.2 parts by mass of sodium dodecylbenzenesulfonate and 4 parts by mass of polyoxyethylene lauryl ether (manufactured by Kao Corporation, product name "Emulgen 147") as emulsifiers, and 0.6 parts by mass of potassium persulfate as a polymerization initiator were added, and polymerization was performed at 70°C for 10 hours with stirring to obtain a latex of the polymer (A1). The polymerization conversion rate of the polymer at this time was 98%.

Next, 80 parts by mass of the obtained latex (20 parts by mass of solid content) and 230 parts by mass of N-methyl-2-pyrrolidone (hereinafter also referred to as "NMP") were added to an eggplant flask, and a dehydration step was performed at 85°C for 6 hours under a reduced pressure using an evaporator. Since only water was removed in the dehydration step, polyoxyethylene lauryl ether remained in the binder composition for the power storage device. In this manner, the binder composition for the power storage device of Example 1 was obtained by replacing the dispersion medium from water to NMP. The solid content concentration of the obtained binder composition for the power storage device was 8% by mass.

<Examples 2 to 12, Comparative Examples 1 to 6>

In Examples 2 to 12 and Comparative Examples 1 to 6, each polymer was synthesized through single-stage polymerization in the same manner as in Example 1, except that the types and amounts of monomers were as described in Table 1 to Table 2 below, and each binder composition for power storage device was obtained in the same manner as in Example 1.

5.1.2. Evaluation of physical properties of binder composition for power storage device

<Method for measuring polymerization conversion rate>

The polymerization conversion rate in the synthesis of each polymer described above was measured as follows.
The polymerized reaction solution was withdrawn at a predetermined time and placed in an aluminum dish (X (g)) whose weight had been measured in advance, and the weight of the reaction solution (Y (g)) was measured. This was dried at 155°C for 15 minutes by using a hot air dryer. The aluminum dish was taken out, and after cooling, the weight of the aluminum dish (Z (g)) was measured. The polymerization conversion rate (%) was calculated from the values of weights X, Y, and Z measured in this manner by using the following formula (1).

$$\text{Polymerization conversion rate (\%)} = ((Z\text{-}X)/Y) \times 100 \quad (1)$$

<Measurement of number average particle diameter>

The binder composition for the power storage device obtained above was diluted with NMP so that the solid content concentration became 0.1 wt%, and this was used as a measurement sample. The obtained measurement sample was measured using dynamic light scattering (DLS) under the following conditions, and the number average particle diameter of each polymer was determined.

· Temperature: 25°C
· NMP refractive index: 1.47

5.1.3. Preparation of slurry for positive electrode for lithium-ion secondary battery

1 part by mass of PVdF (manufactured by Arkema, product name "HSV900") (solid content equivalent value, added as an NMP solution with a concentration of 8%), 2 parts by mass of the polymer (A) (solid content equivalent value, added as the binder composition for the power storage device obtained above), 100 parts by mass of NMC811 (manufactured by Beijing Easpring, product name "ME-83SC") as a positive electrode active material, 6 parts by mass of acetylene black, and 1.8 parts by mass of NMP were charged to a biaxial planetary mixer (manufactured by PRIMIX Corporation, product name "TK HIVIS MIX 2P-03"), adjusted so that the slurry had a solid content concentration of approximately 75%, and stirred at 60 rpm for 1 hour. NMC811 is an abbreviation for ternary nickel cobalt manganese oxide lithium (Ni:Mn:Co=8:1:1).
Thereafter, NMP was added to the obtained paste, and after the solid content concentration was adjusted to 68%, a stirring defoaming machine (manufactured by THINKY Corporation, product name "AWATORI RENTARO") was used to perform stirring and mixing at 200 rpm for 2 minutes, at 1800 rpm for 5 minutes, and further at 1800 rpm for 1.5 minutes under vacuum (approximately $5.0 \times 10^3$ Pa), thereby preparing a slurry for the positive electrode of the lithium-ion secondary battery.

5.1.4. Preparation and physical property evaluation of positive electrode for lithium-ion secondary battery

<Preparation of positive electrode for lithium-ion secondary battery>

On the surface of the current collector made of an aluminum foil with a thickness of 20 $\mu$m, the slurry for the positive electrode of the lithium-ion secondary battery obtained above was uniformly applied by a doctor blade method so that the film thickness after drying was 100 $\mu$m, and dried at 120°C for 20 minutes. Thereafter, press processing was performed by using a roll press machine so that the density of the formed film (positive electrode active material layer) was 3.0 g/cm$^3$, thereby obtaining the positive electrode of the lithium-ion secondary battery.

<Evaluation of electrode state>

The positive electrode for lithium-ion secondary battery obtained above was cut into 10 cm × 10 cm, and the number of burst bubble marks on the surface was visually counted. The evaluation criteria are as follows. The evaluation results are shown in Table 1 to Table 2 below. Those in which no damage to the active material layer was observed showed reduced coating defect due to residual emulsifier and exhibited good cycle properties.

· 5 points: If the number of burst bubble particle marks is 0, there is no coating defect due to the residual emulsifier at all, which is good.

· 4 points: If the number of burst bubble particle marks is 1 or more and 5 or less, there is almost no coating defect due to the residual emulsifier, which is good.

· 3 points: If the number of burst bubble particle marks is 6 or more and 10 or less, there are few coating defects due to the residual emulsifier, which is good.

· 2 points: If the number of burst bubble particle marks is 11 or more and 15 or less, there are some coating defects due to residual emulsifier, making it difficult to use.

· 1 point: If the number of burst bubble particle marks is 16 or more, there are many coating defects due to residual emulsifier, making it unusable.

<Evaluation of adhesion strength>

On the surface of the positive electrode of the lithium-ion secondary battery obtained above, cuts reaching from the active material layer to the current collector are made by using a knife at 2 mm intervals, with 10 cuts each in the vertical and horizontal directions, to create a cross-cut pattern. An adhesive tape with a width of 18 mm (manufactured by Nichiban Co., Ltd., product name "Cellotape" (registered trademark), specified in JIS Z1522:2009) was applied to the cuts and immediately peeled off, and the degree of active material detachment was evaluated through visual judgment. The evaluation criteria are as follows. The evaluation results are shown in Table 1 to Table 2 below.

(Evaluation Criteria)

· 5 points: The number of active material layer detachments is 0.
· 4 points: The number of active material layer detachments is 1 to 5.
· 3 points: The number of active material layer detachments is 6 to 20.
· 2 points: The number of active material layer detachments is 21 to 40.
· 1 point: The number of active material layer detachments is 41 or more.

5.1.5. Preparation and physical property evaluation of lithium-ion secondary battery

<Preparation of slurry for negative electrode of lithium-ion secondary battery>

1 part by mass (in terms of solid content) of a thickener (product name "CMC2200", manufactured by Daicel Corporation), 100 parts by mass (in terms of solid content) of graphite as the negative electrode active material, and 68 parts by mass of water were charged to a biaxial planetary mixer (manufactured by PRIMIX Corporation, product name "TK HIVIS MIX 2P-03"), and stirring was performed at 60 rpm for 1 hour.

Next, SBR (product name "TRD105A", manufactured by ENEOS Materials Corporation) was added in an amount corresponding to 2 parts by mass (in terms of solid content), and stirring was further performed for 1 hour to obtain a paste. Water was added to the obtained paste to adjust the solid content to 50%, and then, by using a stirring defoaming machine (manufactured by THINKY Corporation, product name "AWATORI RENTARO"), stirring and mixing were performed at 200 rpm for 2 minutes, at 1800 rpm for 5 minutes, and further under vacuum at 1800 rpm for 1.5 minutes to prepare a slurry for the negative electrode of the lithium-ion secondary battery.

<Preparation of negative electrode for lithium-ion secondary battery>

On the surface of the current collector made of a copper foil having a thickness of 20 $\mu$m, the slurry for the negative electrode of the lithium-ion secondary battery prepared above was uniformly applied by a doctor blade method so that the film thickness after drying was 120 $\mu$m, and drying treatment was performed at 120°C for 20 minutes. Thereafter, press processing was performed by using a roll press machine so that the density of the formed film (negative electrode active material layer) was 1.9 g/cm$^3$, thereby obtaining the negative electrode for lithium-ion secondary battery.

<Assembly of lithium-ion secondary battery>

In a glove box that was Ar-substituted so that the dew point was -80°C or lower, the negative electrode of the lithium-ion secondary battery prepared above was punched into a circular shape with a diameter of 16.16 mm and placed on a bipolar coin cell (manufactured by Hohsen Corporation, product name "HS Flat Cell"). Next, a separator made of a polypropylene porous membrane punched into a circular shape with a diameter of 24 mm (manufactured by Celgard LLC, product name "Celgard #2400") was placed on top of the negative electrode of the lithium-ion secondary battery. Furthermore, after injecting 500 μL of an electrolyte solution so that air did not enter, the positive electrode of the lithium-ion secondary battery prepared above was punched into a circular shape with a diameter of 15.95 mm and placed on top of the separator, and the outer body of the bipolar coin cell was closed and sealed with screws, thereby assembling a lithium-ion secondary battery. The electrolyte solution used here was a solution in which LiPF$_6$ was dissolved at a concentration of 1 mol/L in a solvent of ethylene carbonate/ethyl methyl carbonate = 1/1 (mass ratio).

<Evaluation of resistance increase rate>

For the lithium-ion secondary battery prepared above, in a constant temperature bath adjusted to 25°C, charging started at a constant current (1.0C), and at the time point when the voltage reached 4.2V, charging continued at a constant voltage (4.2V), and the point when the current value reaches 0.01C was defined as charging completion (cutoff). Thereafter, discharging was started at a constant current (0.05C), and the point when the voltage reached 2.5V was defined as discharging completion (cutoff), and the discharge capacity at the 0$^{th}$ cycle was calculated. Furthermore, charging started at a constant current (1.0C), and at the time point when the voltage reached 4.2V, charging continued at a constant voltage (4.2V), and the point when the current value reached 0.01C was defined as charging completion (cutoff). Thereafter, discharging started at a constant current (1.0C), and the point when the voltage reached 2.5V was defined as discharging completion (cutoff), and the discharge capacity at the 1$^{st}$ cycle was calculated. In this manner, charging and discharging were repeated 100 times. After repeating charging and discharging 100 times, charging and discharging were performed in the same manner as the 0$^{th}$ cycle, the discharge capacity at the 101$^{st}$ time was evaluated, the resistance increase rate was calculated by the following formula (2), and evaluation was performed according to the following criteria. The results were shown in Table 1 to Table 2 below.

Resistance increase rate (%) = (discharge capacity at 101st cycle - discharge capacity at 100th cycle) / (discharge capacity at 0th cycle - discharge capacity at 1st cycle) × 100　　(2)

(Evaluation Criteria)

· 5 points: Resistance increase rate is 100% or more and less than 110%.

· 4 points: Resistance increase rate is 110% or more and less than 120%.

· 3 points: Resistance increase rate is 120% or more and less than 130%.

· 2 points: Resistance increase rate is 130% or more and less than 140%.

· 1 point: Resistance increase rate is 140% or more and less than 150%.

· 0 points: Resistance increase rate is 150% or more.

<Evaluation of cycle properties>

For the lithium-ion secondary battery prepared above, in a constant temperature bath adjusted to 25°C, charging was started at a constant current (1.0C), and at the time point when the voltage reached 4.2V, charging continued at a constant voltage (4.2V), and the point when the current value reached 0.01C was defined as charging completion (cutoff). Thereafter, discharging was started at a constant current (1.0C), and the point when the voltage reached 2.5V was defined as discharging completion (cutoff), and the discharge capacity of the 1$^{st}$ cycle was calculated. In this manner, charging and discharging were repeated 100 times. The capacity retention rate was calculated by the following formula (3), and evaluated according to the following criteria. The results are shown in Table 1 to Table 2 below.

$$\text{Capacity retention rate (\%)}$$
$$= (\text{Discharge capacity at } 100^{\text{th}} \text{ cycle})/(\text{Discharge capacity at } 1^{\text{st}} \text{ cycle}) \quad (3)$$

(Evaluation Criteria)

· 5 points: Capacity retention rate is 95% or more.
· 4 points: Capacity retention rate is 90% or more and less than 95%.
· 3 points: Capacity retention rate is 85% or more and less than 90%.
· 2 points: Capacity retention rate is 80% or more and less than 85%.
· 1 point: Capacity retention rate is 75% or more and less than 80%.
· 0 points: Capacity retention rate is less than 75%.

5.2. Examples 13 to 19, Comparative Example 7

In Example 13, 80 parts by mass of the latex of a polymer (A3) synthesized in Example 3 (20 parts by mass of solid content) and 230 parts by mass of γ-butyrolactone were added to an eggplant flask, and a dehydration step was performed at 85°C for 6 hours under a reduced pressure with an evaporator. In this manner, a binder composition for the power storage device was obtained in the same manner as in Example 3 except that the dispersion medium was replaced from water to γ-butyrolactone, and the same evaluation as in Example 3 was performed. The solid content concentration of the obtained binder composition for the power storage device was 8% by mass.
In Examples 14 to 19, binder compositions for power storage device were obtained in the same manner as in Example 3 except that the dispersion medium was replaced from water to the liquid medium (C) described in Table 3 below, and the same evaluation as in Example 3 was performed. In Comparative Example 7, a binder composition for power storage device was obtained in the same manner as in Example 3 except that the latex of the polymer (A3) synthesized in Example 3 was diluted with water so that the solid content concentration was 8% by mass, and the same evaluation as in Example 3 was performed.

5.3. Examples 20 to 25

Binder compositions for the power storage device were obtained in the same manner as in Example 3 except that the contents of PVdF and the polymer (A3) contained in the slurry for the positive electrode of the lithium-ion secondary battery were set to the amounts described in Table 4 below, and the same evaluation as in Example 3 was performed.

5.4. Example 26

A binder composition for the power storage device was obtained in the same manner as in Example 3 except that an acrylic polymer soluble in NMP was used instead of PVdF, and the same evaluation as in Example 3 was performed. A synthesis example of the acrylic polymer used in Example 26 is shown below.

<Synthesis of acrylic polymer>

An acrylic polymer dispersion was obtained through single-stage polymerization as shown below. To a reactor, 500 parts by mass of water, a monomer mixture consisting of 64 parts by mass of 2-ethylhexyl acrylate, 1 part by mass of styrene, 5 parts by mass of acrylic acid, and 30 parts by mass of acrylonitrile, 0.5 parts by mass of tert-dodecyl mercaptan as a chain transfer agent, 1 part by mass of sodium dodecylbenzenesulfonate as an emulsifier, and 0.3 parts by mass of potassium persulfate as a polymerization initiator were added, and polymerization was performed at a polymerization temperature of 75°C for 8 hours to obtain an acrylic polymer dispersion. The conversion rate of the polymer at this time was 99%.
Next, 1 part by mass of 2,6-di-tert-butyl-p-cresol was added as an antioxidant, and the acrylic polymer dispersion was added dropwise to 3000 parts by mass of a 0.5% calcium chloride aqueous solution. The obtained aggregate was washed with water, and a portion of the obtained aggregate was dried at 80°C, and the amount of the emulsifier contained in the aggregate was analyzed. Thereafter, the same operation was repeated, and when no decrease in the amount of the emulsifier remaining in the aggregate was observed, all of the remaining aggregate was dried at 80°C and the entire amount was recovered.

The acrylic polymer obtained above was added to NMP and stirred overnight to prepare an acrylic polymer solution dissolved in NMP. Here, the content of the acrylic polymer was adjusted to 8 mass% when the entire acrylic polymer solution was taken as 100 mass%.

5.5. Evaluation results

Table 1 to Table 2 below show the polymer compositions, physical property measurement results, and evaluation results used in Examples 1 to 12 and Comparative Examples 1 to 6. Table 3 below shows the slurry compositions for the positive electrode of the lithium-ion secondary battery and evaluation results used in Examples 13 to 19 and Comparative Example 7. Table 4 below shows the slurry compositions for the positive electrode of the lithium-ion secondary battery and the evaluation results used in Examples 20 to 25. Table 5 below shows the slurry composition for the positive electrode of the lithium-ion secondary battery and evaluation results used in Example 26. The numerical values representing the compositions shown in Table 1 to Table 5 below represent parts by mass.

[Table 1]

| | polymer composition | | Example 1 | Example 2 | Example 3 | Example 4 | Example 5 | Example 6 | Example 7 | Example 8 | Example 9 |
|---|---|---|---|---|---|---|---|---|---|---|---|
| | type / compound name | monomer name | polymer (A1) | polymer (A2) | polymer (A3) | polymer (A4) | polymer (A5) | polymer (A6) | polymer (A7) | polymer (A8) | polymer (A9) |
| composition | (a1) α,β-unsaturated nitrile compound | AN | 1 | 30 | 20 | 5 | 26 | | 45 | | 11 |
| | | MAN | | 20 | | 10 | | 27 | | 11 | 11 |
| | (a2) unsaturated carboxylic acid ester | MMA | 5 | | | 5 | 6 | | 5 | | |
| | | BA | 5 | 40 | 20 | 68 | | 13 | 35 | | 60 |
| | | 2EHA | 58 | | 18 | | 48 | 39 | 3 | 62 | |
| | | CHMA | | 2 | | 5 | | | 2 | 10 | |
| | | AMA | 2 | | | 1 | | | | | |
| | | TENPA | | 1 | | 1 | 1 | | 3 | | 1 |
| | | EDMA | | | 2 | 1 | | | | 1 | |
| | | HEMA | | 1 | | | 2 | 1 | 2 | | |
| | | HEA | | 1 | | | 1 | | | | |
| | (a3) unsaturated carboxylic acid | TA | | 1 | | | | | 1 | 5 | 4 |
| | | AA | 1 | 1 | | | | | 1 | 2 | 4 |
| | | MAA | 1 | | | | | | 3 | 3 | 4 |
| | (a4) aromatic vinyl compound | ST | 25 | 2 | 29 | | 5 | 9 | | 5 | 4 |
| | | DVB | | | 1 | | | 1 | | | 1 |
| | (a5) conjugated diene | BD | | | 5 | | | | | 1 | |
| | (a6) (meth) acrylamide | AAM | 1 | | | 2 | | 8 | | | |
| | | MAM | | 1 | | 3 | | 2 | | | |
| | (a7) compound having sulfonic acid group | NaSS | 1 | | 5 | | 10 | | | | |
| emulsifier | sulfonic acid-based emulsifier | sodium alkyldiphenyl ether sulfonate | | | | | 0.5 | | 1 | | |
| | | sodium dodecylbenzene sulfonate | 0.2 | | | | | | | | |
| | carboxylic acid-based emulsifier | semi-hardened tallow fatty acid sodium soap | | | | 1 | | | 0.5 | | |
| | | potassium rosinate | | | | | | | | | 0.5 |
| | nonionic surfactant | polyoxyethylene lauryl ether (EMULGEN 147) | 4 | | | 1 | 0.1 | | 3.5 | | 1 |

| | | | | | | | | | | | |
|---|---|---|---|---|---|---|---|---|---|---|---|
| | | polyoxyethylene alkyl ether (Emulgen 1108) | 1 | 1 | 1 | | 5 | 2.5 | | 2 | |
| | | polyoxyalkylene alkyl ether (Emulgen LS-110) | 1 | | 1 | | | 3 | 0.5 | 2 | |
| | | polyoxyethylene distyrenated phenyl ether (Emulgen A-90) | 1 | 1 | 3 | | 5 | | | 1 | |
| composition parts | (a1) | α,β-unsaturated nitrile compound | 1 | 50 | 20 | 15 | 26 | 27 | 45 | 11 | 22 |
| | (a2) | unsaturated carboxylic acid ester | 70 | 45 | 40 | 80 | 59 | 53 | 50 | 73 | 61 |
| | (a3) | unsaturated carboxylic acid | 2 | 2 | 0 | 0 | 0 | 0 | 5 | 10 | 12 |
| | (a4) | aromatic vinyl compound | 25 | 2 | 30 | 0 | 5 | 10 | 0 | 5 | 5 |
| | (a6) | (meth)acrylamide | 1 | 1 | 0 | 5 | 0 | 10 | 0 | 0 | 0 |
| | (a7) | compound having sulfonic acid group | 1 | 0 | 5 | 0 | 10 | 0 | 0 | 0 | 0 |
| | | nonionic surfactant | 4 | 3 | 2 | 6 | 0.1 | 10 | 9 | 0.5 | 6 |
| | | Total emulsifier | 4.2 | 3 | 2 | 7 | 0.6 | 10 | 10.5 | 0.5 | 6.5 |
| | | monomer total (parts by mass) | 100 | 100 | 100 | 100 | 100 | 100 | 100 | 100 | 100 |
| polymer properties | | number average particle diameter (nm) | 510 | 570 | 810 | 230 | 930 | 80 | 50 | 1000 | 310 |
| evaluation results | | electrode state | 5 | 5 | 5 | 4 | 5 | 4 | 3 | 5 | 4 |
| | | adhesion strength | 5 | 3 | 4 | 5 | 4 | 4 | 5 | 5 | 4 |
| | | resistance increase rate | 4 | 5 | 5 | 5 | 4 | 4 | 5 | 4 | 4 |
| | | cycle properties | 5 | 4 | 5 | 5 | 5 | 5 | 5 | 5 | 4 |

[Table 2]

| polymer composition | | | Example 10 | Example 11 | Example 12 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| type | compound name | monomer name | polymer (A10) | polymer (A11) | polymer (A12) | polymer (B1) | polymer (B2) | polymer (B3) | polymer (B4) | polymer (B5) | polymer (B6) |
| (a1) | α,β-unsaturated nitrile compound | AN | 3 | 21 | 10 | 0 | 10 | 48 | | 10 | 23 |
| | | MAN | | 20 | | | 45 | | 12 | 10 | |
| (a2) | unsaturated carboxylic acid ester | MMA | | 4 | | 5 | 2 | | 5 | | |
| | | BA | 32 | 30 | 13 | 30 | | 33 | 40 | 38 | 15 |
| | | 2EHA | | 27 | 35 | 35 | 30 | | 39 | 20 | 45 |
| | | CHMA | 8 | | 4 | 4 | 9 | | | | 5 |
| | | AMA | 2 | 1 | | 1 | | 2 | | 1 | |
| | | TENPA | | 1 | | | | | 1 | 1 | 1 |
| | | EDMA | | 1 | 2 | | 1 | | | | 1 |
| | | HEMA | | | 2 | | 1 | | | | |
| | | HEA | | | 2 | | 1 | | | | |
| (a3) | unsaturated carboxylic acid | TA | | | | | | | 1 | 1 | |
| | | AA | | | | 1 | | | | | |
| | | MAA | 1 | | | 1 | | | | | |
| (a4) | aromatic vinyl compound | ST | 51 | 3 | | 22 | | 15 | 2 | 18 | 9 |
| | | DVB | 2 | | | 1 | | | | | |
| (a5) | conjugated diene | BD | | | | | | | | | |
| (a6) | (meth)acrylamide | AAM | | 6 | | | | 2 | | | |
| | | MAM | | 6 | | | | | | | 1 |
| (a7) | compound having a sulfonic acid group | NaSS | 1 | | 12 | | 1 | | | 1 | |
| emulsifier | sulfonic acid-based emulsifier | sodium alkyldiphenyl ether sulfonate | | | | | | | | 1 | |
| | | sodium dodecylbenzene sulfonate | | | | | | | | 1 | |
| | carboxylic acid-based emulsifier | semi-hardened tallow fatty acid sodium soap | 1 | | | | 0.5 | | | | |
| | | potassium rosinate | | | | | | | 0.5 | | |
| | nonionic surfactant | polyoxyethylene lauryl ether (Emulgen 147) | 3 | | | 2 | 1 | 2 | | 0 | 5 |

| | | | | | | | | | | | |
|---|---|---|---|---|---|---|---|---|---|---|---|
| | | polyoxyethylene alkyl ether (Emulgen 1108) | | 3 | | | 2 | 2 | 3 | | 5 |
| | | polyoxyalkylene alkyl ether (Emulgen LS-110) | 3 | | | | | 2 | 3 | | |
| | | polyoxyethylene distyrenated phenyl ether (Emulgen A-90) | 1 | 3 | | | 1 | 2 | | | 5 |
| composition parts | (a1) | α,β-unsaturated nitrile compound | 3 | 21 | 30 | 0 | 55 | 48 | 12 | 20 | 23 |
| | (a2) | unsaturated carboxylic acid ester | 42 | 64 | 58 | 75 | 44 | 35 | 85 | 60 | 67 |
| | (a3) | unsaturated carboxylic acid | 1 | 0 | 0 | 2 | 0 | 0 | 1 | 1 | 0 |
| | (a4) | aromatic vinyl compound | 53 | 3 | 0 | 23 | 0 | 15 | 2 | 18 | 9 |
| | (a6) | (meth)acrylamide | 0 | 12 | 0 | 0 | 0 | 2 | 0 | 0 | 1 |
| | (a7) | compound having sulfonic acid group | 1 | 0 | 12 | 0 | 1 | 0 | 0 | 1 | 0 |
| | | nonionic surfactant | 7 | 3 | 3 | 2 | 4 | 8 | 6 | 0 | 15 |
| | | Total emulsifier | 8 | 3 | 3 | 2 | 4.5 | 8 | 6.5 | 2 | 15 |
| | | monomer total (parts by mass) | 100 | 100 | 100 | 100 | 100 | 100 | 100 | 100 | 100 |
| polymer properties | | number average particle diameter (nm) | 150 | 630 | 670 | 720 | 480 | 40 | 390 | 640 | 20 |
| evaluation results | | electrode state | 4 | 5 | 5 | 5 | 4 | 2 | 4 | coagulation | 1 |
| | | adhesion strength | 3 | 3 | 3 | 4 | 1 | 1 | 5 | | 3 |
| | | resistance increase rate | 4 | 4 | 4 | 1 | 4 | 4 | 1 | | 1 |
| | | cycle properties | 3 | 3 | 3 | 1 | 2 | 2 | 1 | | 1 |

[Table 3]

| slurry composition for positive electrode for lithium-ion secondary battery | | Example 3 | Example 13 | Example 14 | Example 15 | Example 16 | Example 17 | Example 18 | Example 19 | Comparative Example 7 |
|---|---|---|---|---|---|---|---|---|---|---|
| PVdF | | 1 | 1 | 1 | 1 | 1 | 1 | 1 | 1 | 1 |
| polymer (A3) synthesized in Example 3 | | 2 | 2 | 2 | 2 | 2 | 2 | 2 | 2 | 2 |
| liquid medium (C) | | NMP | γ-butyrol actone | methyl acetamide | dimethyl formamide | methyl hexyl ketone | triethylene glycol dimethyl ether | butyl acetate | anisole | water |
| evaluation results | electrode state | 5 | 5 | 5 | 4 | 4 | 5 | 4 | 5 | 1 |
| | adhesion strength | 4 | 4 | 4 | 4 | 4 | 5 | 4 | 4 | 1 |
| | resistance increase rate | 5 | 4 | 5 | 4 | 5 | 4 | 5 | 4 | 1 |
| | cycle properties | 5 | 5 | 5 | 4 | 5 | 4 | 5 | 5 | 1 |

EP 4 773 247 A1

[Table 4]

| slurry composition for positive electrode of lithium-ion secondary battery | | Example 3 | Example 20 | Example 21 | Example 22 | Example 23 | Example 24 | Example 25 |
|---|---|---|---|---|---|---|---|---|
| PVdF | | 1 | 1 | 1 | 1 | 2 | 6 | 4 |
| polymer (A3) synthesized in Example 3 | | 2 | 1 | 4 | 7 | 2 | 2 | 4 |
| liquid medium (C) | | NMP | NMP | NMP | NMP | NMP | NMP | NMP |
| evaluation results | electrode state | 5 | 5 | 4 | 3 | 5 | 5 | 4 |
| | adhesion strength | 4 | 3 | 4 | 5 | 5 | 5 | 5 |
| | resistance increase rate | 5 | 5 | 4 | 3 | 5 | 4 | 4 |
| | cycle properties | 5 | 4 | 5 | 4 | 5 | 5 | 4 |

[Table 5]

| slurry composition for positive electrode of lithium-ion secondary battery | | Example 3 | Example 26 |
|---|---|---|---|
| PVdF | | 1 | |
| acrylic polymer | | | 1 |
| polymer (A3) synthesized in Example 3 | | 2 | 2 |
| liquid medium (C) | | NMP | NMP |
| evaluation results | electrode state | 5 | 5 |
| | adhesion strength | 4 | 5 |
| | resistance increase rate | 5 | 4 |
| | cycle properties | 5 | 5 |

In Table 1 to Table 2 above, the polymer numbers synthesized in each example are described in the row below the Example numbers and Comparative Example numbers. The monomers, emulsifiers, and polymers in Table 1 to Table 5 above represent the following compounds, respectively.

<Monomer>

($\alpha$,$\beta$-unsaturated nitrile compound)

· AN: acrylonitrile
· MAN: methacrylonitrile

(unsaturated carboxylic acid ester)

· MMA: methyl methacrylate
· BA: butyl acrylate
· 2EHA: 2-ethylhexyl acrylate

· CHMA: cyclohexyl methacrylate
· AMA: allyl methacrylate
· TENPA: trimethylolpropane triacrylate
· EDMA: ethylene glycol dimethacrylate
· HEMA: hydroxyethyl methacrylate
· HEA: hydroxyethyl acrylate

(Unsaturated carboxylic acid)

· TA: itaconic acid
· AA: acrylic acid
· MAA: methacrylic acid

(Aromatic vinyl compound)

· ST: styrene
· DVB: divinylbenzene

(Conjugated diene compound)

· BD: 1,3-butadiene

((Meth)acrylamide)

· AAM: acrylamide
· MAM: methacrylamide

(Compound having sulfonic acid group)

· NaSS: sodium styrenesulfonate

<Emulsifier>

(Sulfonic acid-based emulsifier)

· Sodium alkyldiphenyl ether sulfonate: product name "Pelex SS-L", manufactured by Kao Corporation
· Sodium dodecylbenzenesulfonate: product name "Neopelex G-65", manufactured by Kao Corporation

(Carboxylic acid-based emulsifier)

· Semi-hardened beef tallow fatty acid sodium soap: product name "NS Soap", manufactured by Kao Corporation
· Potassium rosinate: product name "Diprosin A-100", manufactured by Toho Chemical Co., Ltd.

(Nonionic surfactant)

· Polyoxyethylene lauryl ether: product name "Emulgen 147", manufactured by Kao Corporation
· Polyoxyethylene alkyl ether: product name "Emulgen 1108", manufactured by Kao Corporation
· Polyoxyalkylene alkyl ether: product name "Emulgen LS-110", manufactured by Kao Corporation
· Polyoxyethylene distyrenated phenyl ether: product name "Emulgen A-90", manufactured by Kao Corporation

\<Polymer\>

· PVdF: product name "HSV900", manufactured by Arkema, polyvinylidene fluoride

In Examples 1 to 26, as the slurry for the positive electrode of the lithium-ion secondary battery, one containing the binder composition for the power storage device of the invention and an active material was used. As a result, the active material layer formed by the slurry exhibited a good surface state, and during the measurement of peel strength, the active material layer itself did not become brittle, causing falling off of the active material or cracks, and it is confirmed that sufficient binding properties were obtained in the binder. In addition, it is confirmed that the resistance increase rate in the obtained lithium-ion secondary battery was reduced, and the cycle properties were improved. With the slurry for the positive electrode of the lithium-ion secondary battery containing an appropriate amount of the nonionic surfactant (B), the polymer (A) can maintain the particle shape in the liquid medium (C), and it is considered that a good conductive path was formed in the formed active material layer, so the resistance increase rate was reduced and the cycle properties were improved. Therefore, it is found that, by using the binder composition for the power storage device of the invention, a positive electrode for lithium-ion secondary battery excellent in surface state, adhesiveness, and ionic conductivity can be produced, and the cycle properties of the lithium-ion secondary battery can be improved.

In Examples 13 to 19 and Comparative Example 7, a slurry for the positive electrode of the lithium-ion secondary battery containing a liquid medium other than NMP was used. As a result, it was found that in the case of using a slurry for the positive electrode of the lithium-ion secondary battery containing a predetermined organic solvent, a positive electrode for the lithium-ion secondary battery excellent in surface state, adhesiveness, and ionic conductivity can be produced, and the cycle properties of the lithium-ion secondary battery can be improved. On the other hand, in the case of using a slurry for the positive electrode of the lithium-ion secondary battery containing water, favorable results were not obtained.

In Examples 20 to 25, a slurry for the positive electrode of the lithium-ion secondary battery in which the content ratio of PVdF and/or the polymer (A3) was appropriately changed was used. As a result, it is found that in any of the Examples, a positive electrode for lithium-ion secondary battery excellent in surface state, adhesion, and ionic conductivity can be produced, and the cycle properties of the lithium-ion secondary battery can be improved.

In Example 26, a slurry for the positive electrode of lithium-ion secondary battery using an acrylic polymer soluble in NMP instead of PVdF is used. It is found that even in such a case, a positive electrode for the lithium-ion secondary battery excellent in surface state, adhesiveness, and ionic conductivity can be produced, and the cycle properties of the lithium-ion secondary battery can be improved.

The invention is not limited to the embodiments, and various modifications are possible. The invention encompasses configurations substantially the same as the configurations described in the embodiments (for example, configurations having the same functions, methods, and results, or configurations having the same objects and effects). The invention also encompasses configurations in which non-essential parts of the configurations described in the above embodiments are replaced with other configurations. Furthermore, the invention encompasses configurations that achieve the same operational effects as the configurations described in the above embodiments or configurations that can achieve the same objects. Furthermore, the invention encompasses configurations in which conventional techniques are added to the configurations described in the above embodiments.

**Claims**

1. A binder composition for a power storage device, the binder composition comprising: a polymer (A), a nonionic surfactant (B), and a liquid medium (C),
wherein, when a total of repeating units comprised in the polymer (A) is 100 mass%, the polymer (A) comprises:

1 mass% to 50 mass% of a repeating unit (a1) derived from an $\alpha,\beta$-unsaturated nitrile compound; and

40 mass% to 80 mass% of a repeating unit (a2) derived from an unsaturated carboxylic acid ester,
a content ratio of the nonionic surfactant (B) is 0.1 parts by mass to 10 parts by mass with respect to 100 parts by mass of the polymer (A), and
the liquid medium (C) is at least one selected from a group consisting of aliphatic hydrocarbons, alicyclic hydrocarbons, aromatic hydrocarbons, ketones, esters, ethers, glycol ethers, lactams, lactones, and amides.

2. The binder composition for the power storage device as claimed in claim 1, wherein:

   the polymer (A) is polymer particles, and
   a number average particle diameter of the polymer particles is 50 nm or more and 1,000 nm or less.

3. The binder composition for the power storage device as claimed in claim 1 or 2, wherein the polymer (A) further comprises 0.1 mass% to 10 mass% of a repeating unit (a3) derived from an unsaturated carboxylic acid.

4. The binder composition for the power storage device as claimed in claim 1 or 2, wherein the polymer (A) further comprises 0.1 mass% to 10 mass% of a repeating unit (a6) derived from (meth)acrylamide.

5. The binder composition for the power storage device as claimed in claim 1 or 2, wherein the polymer (A) further comprises 0.1 mass% to 10 mass% of a repeating unit (a7) derived from a compound having a sulfonic acid group.

6. A slurry for a power storage device electrode, the slurry comprising: the binder composition for the power storage device as claimed in claim 1 or 2; and an active material.

7. The slurry for the power storage device electrode as claimed in claim 6, further comprising a thickener.

8. The slurry for the power storage device electrode as claimed in claim 6, wherein the active material is a positive electrode active material.

9. The slurry for the power storage device electrode as claimed in claim 8, wherein the positive electrode active material comprises at least one selected from a group consisting of lithium cobalt oxide, lithium nickel oxide, lithium manganese oxide, ternary nickel cobalt manganese oxide lithium, and an olivine-type lithium-containing phosphate compound.

10. A power storage device electrode comprising: a current collector; and an active material layer formed by coating and drying the slurry for the power storage device electrode as claimed in claim 6 to a surface of the current collector.

11. A power storage device, comprising the power storage device electrode as claimed in claim 10.

## INTERNATIONAL SEARCH REPORT

| International application No. |
| --- |
| **PCT/JP2024/030812** |

### A. CLASSIFICATION OF SUBJECT MATTER

*H01M 4/62*(2006.01)i; *C08F 220/06*(2006.01)i; *C08F 220/18*(2006.01)i; *C08F 220/56*(2006.01)i; *C08L 33/08*(2006.01)i; *H01G 11/38*(2013.01)i; *H01M 4/13*(2010.01)i; *H01M 4/139*(2010.01)i; *H01M 4/1391*(2010.01)i; *H01M 4/1397*(2010.01)i; *H01M 4/505*(2010.01)i; *H01M 4/525*(2010.01)i; *H01M 4/58*(2010.01)i

FI: H01M4/62 Z; H01M4/139; H01M4/1391; H01M4/1397; H01M4/13; H01M4/525; H01M4/505; H01M4/58; H01G11/38; C08F220/56; C08F220/06; C08F220/18; C08L33/08

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2012-256541 A (ZEON CORPORATION) 27 December 2012 (2012-12-27) claims, paragraphs [0022], [0080]-[0089], [0092], [0097], [0103], [0126] | 1-11 |
| Y | | 4-5 |
| Y | CN 115881968 A (SHENZHEN HAODIAN TECH CO., LTD.) 31 March 2023 (2023-03-31) paragraphs [0013]-[0015], [0029], [0034], [0048], [0142]-[0155] | 4-5 |
| Y | WO 2006/101182 A1 (ZEON CORPORATION) 28 September 2006 (2006-09-28) paragraphs [0026], [0029]-[0035], [0053], [0058], [0059] | 4-5 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/030812**

| Patent document cited in search report | | | Publication date (day/month/year) | Patent family member(s) | Publication date (day/month/year) |
|---|---|---|---|---|---|
| JP | 2012-256541 | A | 27 December 2012 | (Family: none) | |
| CN | 115881968 | A | 31 March 2023 | (Family: none) | |
| WO | 2006/101182 | A1 | 28 September 2006 | US 2009/0053603 A1 paragraphs [0031], [0034]-[0039], [0059], [0064], [0066] KR 10-2007-0114221 A CN 101147284 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10298386 A
- JP 2019194944 A
- JP 5999399 B
- JP 5477610 B
- JP 2020184461 A